# EUROPEAN PATENT APPLICATION

(11) **EP 4 654 218 A1**
(43) Date of publication of application: **26.11.2025**
(21) Application number: 24732152.4
(22) Date of filing: 11.01.2024
(51) Int. Cl.: G21F 9/16, B01D 29/11, B01D 29/92, B23B 47/26

(54) **RADIOACTIVE LIQUID WASTE REMOVAL SYSTEM**

(30) Priority: 19.01.2023 KR 20230007882
(71) Applicant: Korea Hydro & Nuclear Power Co., Ltd, Gyeongju-si, Gyeongsangbuk-do 38120 (KR)
(72) Inventor: HWANG, Young Hwan, Daejeon 34101 (KR); LEE, Mi Hyun, Daejeon 34101 (KR); KIM, Cheon Woo, Daejeon 34101 (KR)
(74) Representative: Glawe, Delfs, Moll
(86) International application number: PCT/KR2024/095023
(87) International publication number: WO 2024/155176

(57) **Abstract**

A liquid waste removal system for removing liquid waste remaining within a concrete drum that houses a container filled with concentrated waste liquid is disclosed. A liquid waste removal system according to an embodiment of the present invention, which is for removing liquid waste remaining inside a concrete drum that houses a container filled with radioactive waste, includes: a fixed support supporting and fixing the concrete drum; and a transfer pipe penetrating one side of the concrete drum and discharging the liquid waste out of the concrete drum.

## Description

### [TECHNICAL FIELD]

The present invention relates to a radioactive liquid waste removal system for removing radioactive liquid waste remaining in a concrete drum that stores a container charged with concentrated waste.

### [BACKGROUND ART]

Nuclear fuel refers to a material that can be charged into a reactor to induce a chain reaction of nuclear fission to obtain usable energy, and radioactive waste refers to the materials inevitably generated during the use of nuclear fuel. Radioactive waste can be categorized into solid, liquid, and gas.

Among these, radioactive liquid waste contains a few percent of non-radioactive substances (such as dust, soil, sludge, synthetic detergents, oil, etc.) and less than several thousand ppm of radioactive substances (such as Ag, Fe, B, Si, Mg, Ca, Al, Zn, Cu, Ti, S, Na, K, etc.). The sources of radioactive liquid waste include laboratory system water, laundry wastewater, system decontamination water, floor drainage, etc.

This radioactive liquid waste is inevitably generated by nuclear power generation, nuclear fuel cycle facilities, and the use of radioactive isotopes, and must be safely treated and managed not to harm humans over the long term. Currently, the treatment of radioactive liquid waste involves evaporation and concentration to reduce volume.

### [TECHNICAL PROBLEMS]

Meanwhile, the concentrated waste liquid generated at the Kori Nuclear Power Plant is packed in large concrete drums for long-term storage. The large concrete drums created in the past contain four 200 L containers filled with concentrated waste liquid. Some of the concentrated waste liquid can leak over time from these containers stored inside the concrete drums. In other words, liquid waste can leak and remain within the concrete drums, posing potential safety issues. Therefore, there is a need to develop a system to safely and effectively handle this situation.

The problem that the present invention aims to solve is to provide a liquid waste removal system for removing liquid waste remaining in a concrete drum that stores a container charged with concentrated waste liquid.

The objectives of the present invention are not limited to the aforementioned issues, and other unstated objectives will become apparent to those skilled in the art from the following descriptions.

### [TECHNICAL SOLUTIONS]

A liquid waste removal system according to an embodiment of the present invention for achieving the above objective, for removing liquid waste remaining inside a concrete drum that houses a container filled with radioactive waste, includes: a fixed support supporting and fixing the concrete drum; and a transfer pipe penetrating one side of the concrete drum and discharging the liquid waste out of the concrete drum.

The fixed support may include a horizontal support part, on which the concrete drum is placed and supported, and a vertical support part, which supports the horizontal support part and extends in a direction of gravity.

The liquid waste removal system may further include: an angle adjustment part varying a length of the vertical support part to tilt the concrete drum in one direction.

The liquid waste removal system may further include: a crane lifting the concrete drum for the removal of the liquid waste within the concrete drum.

The transfer pipe may include a drilling part, which creates a hole on one side of the concrete drum, a filtering part, which is connected to the drilling part and filters the liquid waste and solid waste within the concrete drum, and a waste collection part, which is connected to the filtering part and collects the liquid waste.

The drilling part may include a cutter on its surface to form the hole on one side of the concrete drum, and a transfer pipe, which discharges the liquid waste out of the concrete drum.

The filtering part may include a plurality of partitions to allow the liquid waste to pass through and filter the solid waste.

The partitions may be spaced apart from one another within the filtering part, and a size of the partitions may increase from the drilling part toward the waste collection part.

The waste collection part may include a compression pad, which contacts an outer boundary of the hole.

The waste collection part may further include a check valve, which discharges gases emitted from inside the concrete drum to the outside.

A diameter of the drilling part may be smaller than a diameter of the filtering part, and the diameter of the filtering part may be smaller than the diameter of the waste collection part, with the drilling part being accommodated within the filtering part and the filtering part being accommodated within the waste collection part, forming a telescopic structure.

A collection tank, which is connected to the transfer pipe and receives the liquid waste discharged from the concrete drum and transferred through the transfer pipe, may be provided.

Specific details of other embodiments are included in the detailed description and drawings.

### [ADVANTAGEOUS EFFECTS]

According to the present invention, a liquid waste removal system for removing liquid waste remaining in a concrete drum that stores a container charged with concentrated waste liquid can be provided.

### [BRIEF DESCRIPTION OF DRAWINGS]

FIG. 1 is a schematic diagram of a liquid waste removal system according to an embodiment of the present invention.
FIGS. 2 and 3 are schematic diagrams for explaining the liquid waste removal system according to an embodiment of the present invention.
FIG. 4 is a schematic diagram illustrating the transfer pipe of the liquid waste removal system according to an embodiment of the present invention.
FIGS. 5 and 6 are schematic diagrams illustrating the filtering part in the transfer pipe of the liquid waste removal system according to an embodiment of the present invention.
FIG. 7 is a schematic diagram illustrating the connection relationship between the concrete drum and the transfer pipe of the liquid waste removal system according to an embodiment of the present invention.
FIG. 8 is a schematic diagram illustrating the transfer pipe of the liquid waste removal system according to an embodiment of the present invention.

### [BEST MODE FOR CARRYING OUT THE INVENTION]

The present invention provides a liquid waste removal system for removing liquid waste remaining inside a concrete drum that houses a container filled with radioactive waste, including: a fixed support supporting and fixing the concrete drum; and a transfer pipe penetrating one side of the concrete drum and discharging the liquid waste out of the concrete drum.

### [MODES FOR CARRYING OUT THE INVENTION]

Preferred embodiments of the present invention will hereinafter be described in detail with reference to the accompanying drawings. The advantages and features of the present invention, and methods for achieving them, will become apparent with reference to the embodiments described below in detail along with the accompanying drawings. However, the present invention is not limited to the embodiments disclosed herein but can be implemented in various other forms. These embodiments are provided to make the disclosure of the present invention thorough and to fully convey the scope of the invention to those skilled in the art, and the present invention is defined only by the scope of the claims. Throughout the specification, the same reference numerals refer to the same components.

Hereinafter, a liquid waste removal system according to an embodiment of the present invention will be described.

The low and intermediate-level radioactive waste generated from the operation of domestic nuclear power plants is classified into general solid waste, concentrated waste liquid, waste resin, and waste filters based on the source and content. General solid waste, generated from maintenance, refurbishment, and decontamination operations at nuclear power plants, consists of combustible materials such as protective clothing, PVC products, decontamination paper, and wood, as well as non-combustible materials such as metal, glass, HEPA filters, and contaminated concrete. These materials are separately stored in 200 L drums and 320 L repackaged drums, depending on the composition of the contents, and are stored in temporary storage facilities within the nuclear power plant site.

Concentrated waste liquid, generated from the solidification treatment of boric acid waste liquid and various drainages, consists of cement and paraffin depending on the solidification method, and is packaged in the same drums as general solid waste and stored in temporary storage facilities within the nuclear power plant site.

Additionally, waste filters are generated from filters used in the primary and secondary cooling systems of nuclear power plants, and are packaged in 200 L concrete shielding drums and concrete-lined containers and stored in temporary storage facilities within the nuclear power plant site, similar to general solid waste and concentrated waste liquid. Waste resin, generated from the chemical and volume control system (CVCS), spent fuel storage pools, and boron recovery systems, is packaged in 200 L concrete shielding drums and high integrity containers (HICs) and stored in temporary storage facilities within the nuclear power plant site.

Meanwhile, among the packaging containers for radioactive waste, concentrated waste liquid can be stored in 200 L containers. These 200 L containers can be made of steel. Additionally, to ensure long-term storage and prevent radiation leakage, four of these containers can be repackaged in a concrete drum. When these containers are stored in a concrete drum, liquid waste can leak from the containers over a prolonged storage period.

The present invention relates to a liquid waste removal system for removing liquid waste remaining in the concrete drum when liquid waste leaks from the containers repackaged in a concrete drum.

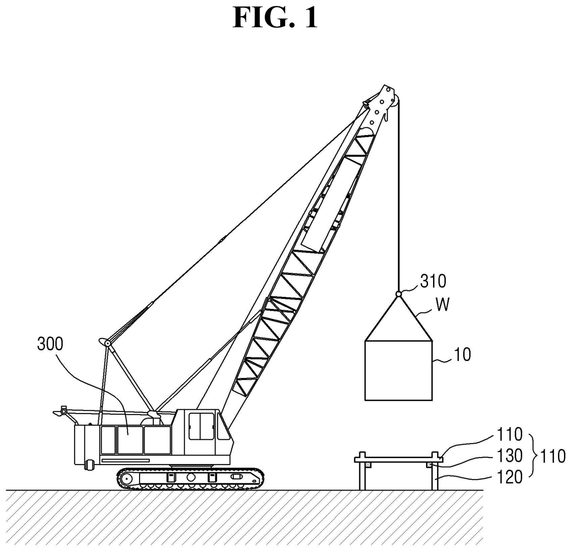

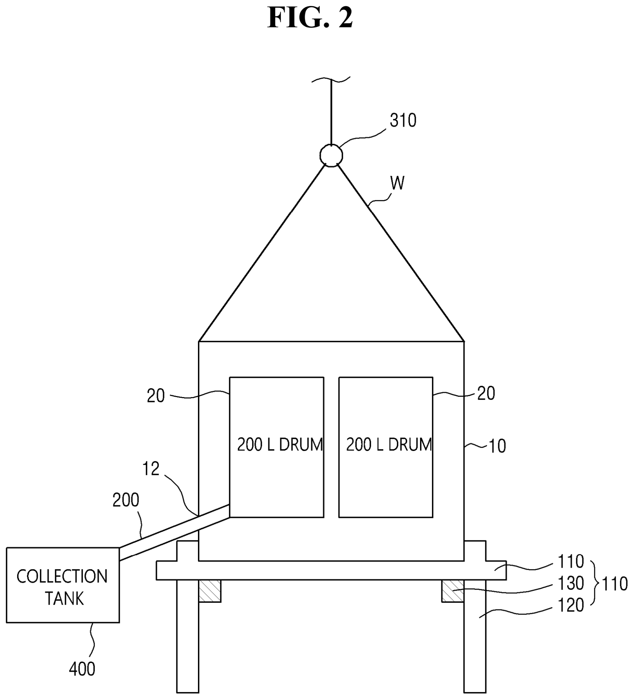

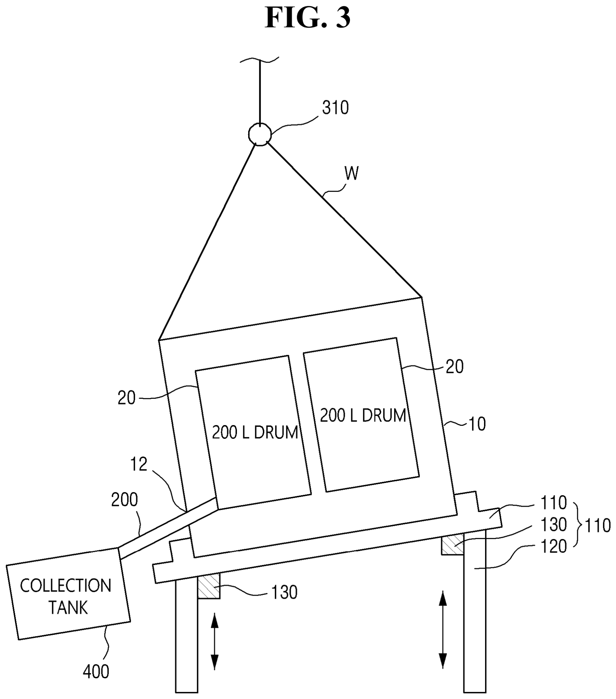

FIG. 1 is a schematic diagram of a liquid waste removal system according to an embodiment of the present invention. FIGS. 2 and 3 are schematic diagrams for explaining the liquid waste removal system according to an embodiment of the present invention.

Referring to FIGS. 1 through 3, a liquid waste removal system 1 according to an embodiment of the present invention is for removing liquid waste remaining in a concrete drum 10, which houses containers 20 filled with radioactive waste.

The liquid waste removal system 1 may include a fixed support 100, which supports and fixes the concrete drum 10, and a transfer pipe 200, which penetrates one side of the concrete drum 10 and discharges the liquid waste out of the concrete drum 10.

The containers within the concrete drum 10 may be, for example, 200 L steel containers 20. The containers 20 hold radioactive waste, such as general solid waste, concentrated waste liquid, waste resin, and waste filters. Low and intermediate-level radioactive waste generated during the operation of nuclear power plants is stored in temporary storage facilities at each nuclear power plant, and the types of nuclear waste and the forms of packaging containers vary.

Referring to FIGS. 2 and 3, the fixed support 100 may support the concrete drum 10 during the liquid waste discharge operation, allowing the discharge operation to proceed. The fixed support 100 may include a horizontal support part 110, on which the concrete drum 10 is placed and supported, and vertical support parts 120, which support the horizontal support part 110 and extends in the direction of gravity.

Meanwhile, to facilitate the discharge of liquid waste from the concrete drum 10, the concrete drum 10 may be tilted. By tilting the concrete drum 10, the liquid waste within the concrete drum 10 may be discharged in the direction in which the concrete drum 10 is tilted due to gravity.

To tilt the concrete drum 10 in one direction, the fixed support 100 may further include an angle adjustment part 130, which varies the length of the vertical support parts 120. For example, if the length of the vertical support part 120 on one side is reduced while the length of the vertical support part 120 on the other side remains the same, the horizontal support part 110 may be tilted in the direction of the shortened side. As a result, the concrete drum 10 on the horizontal support part 110 may also be tilted in one direction. As the concrete drum 10 is tilted, the liquid waste within the concrete drum 10 may flow out in the tilted direction.

For example, the angle adjustment part 130 may be in the form of a cylinder that varies the length of the vertical support parts 120. The angle adjustment part 130 may be provided on each of the vertical support parts 120 on both sides. Alternatively, the angle adjustment part 130 may be provided on one of the vertical support parts 120 on either side.

Meanwhile, referring again to FIG. 1, the liquid waste removal system 1 may further include a crane 300. The crane 300 may lift the concrete drum 10 to facilitate the removal of liquid waste from the concrete drum 10. That is, the concrete drum 10 stored in a repository may be lifted by the crane 300 and moved to the fixed support 100. Since the concrete drum 10 needs to be moved to the fixed support 100 for the removal of liquid waste, the crane 300 may perform the transport operation of the concrete drum 10.

Here, the top of the concrete drum 10 may be connected to a crane connection part 310 through wires W. The crane connection part 310 may be connected to the crane 300, allowing the concrete drum 10 to be lifted and moved by the crane 300.

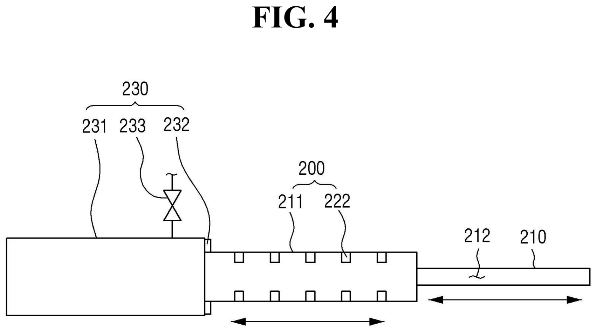

FIG. 4 is a schematic diagram illustrating the transfer pipe of the liquid waste removal system according to an embodiment of the present invention.

Referring to FIGS. 2 through 4, the liquid waste removal system 1 may include a transfer pipe 200, which discharges the liquid waste remaining in the concrete drum 10 to the outside.

The transfer pipe 200 may include a drilling part 210, which creates a hole 12 on one side of the concrete drum 10, a filtering part 220, which is connected to the drilling part 210 and filters the liquid waste and solid waste within the concrete drum 10, and a waste collection part 230, which is connected to the filtering part 220 and collects the liquid waste.

The drilling part 210 may form the hole 12 on the side of the concrete drum 10. Therefore, the drilling part 210 may include a cutter on its surface to create the hole 12 and a transfer pipe 212, which discharges the liquid waste out of the concrete drum 10.

The drilling part 210 may rotate by receiving power from an external power source, and the cutter on its surface may rotate to form the hole 12 on the side of the concrete drum 10. It is important to ensure that each container 20 within the concrete drum 10 is not damaged by the drilling part 210 during the formation of the hole 12. If the containers 20 are damaged during the formation of the hole 12, there is a possibility that the radioactive waste in the containers 20 may leak. Therefore, the containers 20 must not be damaged during the formation of the hole 12.

To this end, it is necessary to identify the internal state of the concrete drum 10 through non-destructive testing before the formation of the hole 12. Once the position of each container 20 within the concrete drum 10 is determined through non-destructive testing, the position for forming the hole 12 and the insertion depth of the drilling part 210 may be determined.

Once the formation of the hole 12 is complete, the rotation of the drilling part 210 is stopped, and the drilling operation by the cutter is also stopped. The drilling part 210 may then function as a transfer path for the liquid waste through the transfer pipe 212. That is, the front end of the drilling part 210 is inserted into the concrete drum 10 through the hole 12, allowing the liquid waste remaining within the concrete drum 10 to be discharged and flow through the transfer pipe 212.

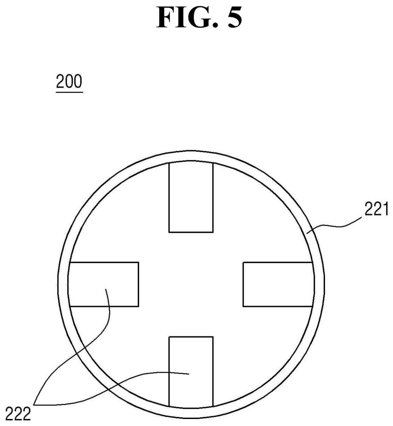

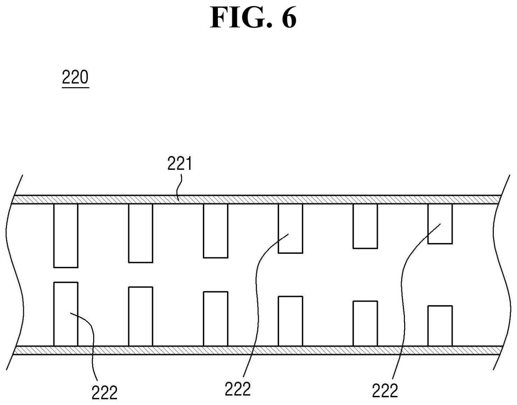

FIGS. 5 and 6 are schematic diagrams illustrating the filtering part in the transfer pipe of the liquid waste removal system according to an embodiment of the present invention.

The filtering part 220, which is connected to the drilling part 210, allows liquid waste to pass through while filtering out solid waste. In addition to liquid waste, solid waste such as sludge may also be present within the concrete drum 10. To collect only the liquid waste and separate the solid waste, the filtering part 220 may include a plurality of partitions 222 within a housing 221.

Here, the housing 221 may function as a conduit through which liquid waste moves. The partitions 222 allow liquid waste to flow through while preventing the flow of solid waste. As a plurality of partitions are provided, it becomes difficult for solid waste to pass continuously, making it harder for solid waste to be discharged out of the filtering part 220.

Meanwhile, referring to FIGS. 4 through 6, the partitions 222 may be spaced apart from one another within the housing 221 of the filtering part 220.

Additionally, the partitions 222 may increase in size from the drilling part 210 toward the waste collection part 230. This makes it difficult for solid waste to move from the filtering part 220 toward the waste collection part 230. As a result, the solid waste is unlikely to pass through the filtering part 220, allowing only the liquid waste to move to the waste collection part 230. The filtered solid waste may be removed from the filtering part 220 through a separate process.

The waste collection part 230, which is connected to the filtering part 220, temporarily collects the liquid waste discharged from the concrete drum 10 and may function as a buffer until it is finally transferred to a collection tank 400.

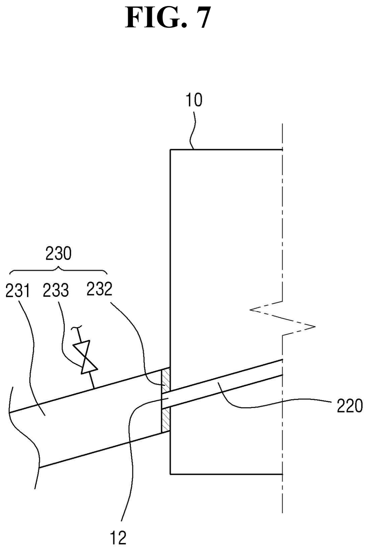

FIG. 7 is a schematic diagram illustrating the connection relationship between the concrete drum and the transfer pipe of the liquid waste removal system according to an embodiment of the present invention.

Referring to FIGS. 4 and 7, the lateral side of the waste collection part 230 may contact the side of the concrete drum 10. Specifically, the lateral side of the waste collection part 230 may contact the outer boundary of the hole 12 formed in the side of the concrete drum 10. When liquid waste is discharged through the hole 12, some of the liquid waste may leak out of the concrete drum 10 along the outer surfaces of the drilling part 210 and the filtering part 220. Such leakage may contaminate the surrounding work area with radioactive waste. Therefore, it is necessary to prevent this leakage.

To this end, the waste collection part 230 may include a compression pad 232, which contacts the outer boundary of the hole 12. The compression pad 232 ensures that the lateral side of the waste collection part 230 is tightly sealed against the side of the concrete drum 10, eliminating any gap therebetween, thus preventing the external leakage of liquid waste through the hole 12. The compression pad 232 may be formed of rubber or a polymer material.

Meanwhile, referring to FIG. 4, the waste collection part 230 may include a main body 231, which is for storing discharged liquid waste and a check valve 233, which is installed on the main body 231. In addition to the liquid waste, gases may also be present within the concrete drum 10. When the liquid waste is discharged, these gases may also be discharged into the waste collection part 230 through the drilling part 210 and the filtering part 220. If gases accumulate in the waste collection part 230, the internal pressure may increase, which is not desirable for system safety. Therefore, it is necessary to discharge the gases from the waste collection part 230 to the outside. To achieve this, the waste collection part 230 may include a check valve 233, which discharges gases emitted from within the concrete drum 10 to the outside.

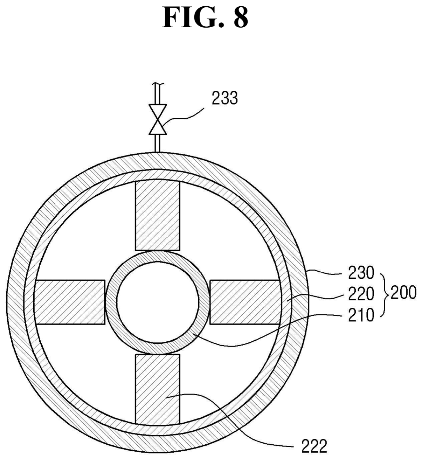

FIG. 8 is a schematic diagram illustrating the transfer pipe of the liquid waste removal system according to an embodiment of the present invention.

Referring to FIGS. 4 and 8, the transfer pipe 200 may have a telescopic structure. That is, the drilling part 210 and the filtering part 220, which form the transfer pipe 200, may have lengths that are flexibly variable. Specifically, in the transfer pipe 200, the diameter of the drilling part 210 may be smaller than the diameter of the filtering part 220, and the diameter of the filtering part 220 may be smaller than the diameter of the waste collection part 230. As a result, the flexible drilling part 210, which has a variable length, may be accommodated within the filtering part 220. Also, the length-variable flexible filtering part 220 may be accommodated within the waste collection part 230. In other words, the transfer pipe 200 may have a telescopic structure with its length variable depending on the situation.

Referring again to FIGS. 2 and 3, the liquid waste removal system 1 may include the collection tank 400. The collection tank 400 may be connected to the transfer pipe 200 and may receive the liquid waste discharged from the concrete drum 10 and transported through the transfer pipe 200. The liquid waste within the concrete drum 10 may be collected into the collection tank 400, and the collected liquid waste may be processed and stored according to a waste treatment procedure.

According to the liquid waste removal system 1 of the present invention, liquid waste within the concrete drum 10, which has been stored for a long period, can be effectively removed. After processing the liquid waste within the concrete drum 10, the dismantling of the long-stored concrete drum 10 and the containers 20 stored inside can be performed safely. Additionally, the condition of the radioactive waste stored within each container 20 in the concrete drum 10 can be checked and analyzed, allowing for the storage of the radioactive waste using an appropriate method based on its state (liquid, solid, sludge, etc.).

Although the embodiments of the present invention have been described above with reference to the accompanying drawings, those skilled in the art will understand that the present invention can be implemented in other specific forms without changing its technical spirit or essential features. Therefore, the embodiments described above should be understood as illustrative rather than restrictive in all respects.

## Claims

1. A liquid waste removal system for removing liquid waste remaining inside a concrete drum that houses a container filled with radioactive waste, comprising:
a fixed support supporting and fixing the concrete drum; and
a transfer pipe penetrating one side of the concrete drum and discharging the liquid waste out of the concrete drum.

2. The liquid waste removal system of claim 1, wherein the fixed support includes a horizontal support part, on which the concrete drum is placed and supported, and a vertical support part, which supports the horizontal support part and extends in a direction of gravity.

3. The liquid waste removal system of claim 2, further comprising:
an angle adjustment part varying a length of the vertical support part to tilt the concrete drum in one direction.

4. The liquid waste removal system of claim 1, further comprising:
a crane lifting the concrete drum for the removal of the liquid waste within the concrete drum.

5. The liquid waste removal system of claim 1, wherein the transfer pipe includes a drilling part, which creates a hole on one side of the concrete drum, a filtering part, which is connected to the drilling part and filters the liquid waste and solid waste within the concrete drum, and a waste collection part, which is connected to the filtering part and collects the liquid waste.

6. The liquid waste removal system of claim 5, wherein the drilling part includes a cutter on its surface to form the hole on one side of the concrete drum, and a transfer pipe, which discharges the liquid waste out of the concrete drum.

7. The liquid waste removal system of claim 5, wherein the filtering part includes a plurality of partitions to allow the liquid waste to pass through and filter the solid waste.

8. The liquid waste removal system of claim 7, wherein
the partitions are spaced apart from one another within the filtering part, and
a size of the partitions increases from the drilling part toward the waste collection part.

9. The liquid waste removal system of claim 5, wherein the waste collection part includes a compression pad, which contacts an outer boundary of the hole.

10. The liquid waste removal system of claim 9, wherein the waste collection part further includes a check valve, which discharges gases emitted from inside the concrete drum to the outside.

11. The liquid waste removal system of claim 5, wherein
a diameter of the drilling part is smaller than a diameter of the filtering part, and
the diameter of the filtering part is smaller than the diameter of the waste collection part, with the drilling part being accommodated within the filtering part and the filtering part being accommodated within the waste collection part, forming a telescopic structure.
